# EUROPÄISCHE PATENTSCHRIFT

(11) **EP 1 155 899 B1**
(45) Veröffentlichungstag und Bekanntmachung des Hinweises auf die Patenterteilung: **11.08.2004**
(21) Anmeldenummer: 01111717.3
(22) Anmeldetag: 15.05.2001
(51) Int. Cl.: B60K 28/06, F16H 61/22

(54) **Verfahren zum Erkennen einer Anfahrabsicht des Fahrers eines mit einem selbsttätig schaltenden Getriebe ausgerüsteten Kraftfahrzeuges**
Method of detecting an intention of the driver to start driving a motor vehicle with an automatic transmission
Dispositif pour détecter l'intention de conducteur à démarrer un véhicule automobile pourvu d'une boîte de vitesse automatique

(30) Priorität: 19.05.2000 DE 10024920
(43) Veröffentlichungstag der Anmeldung: 21.11.2001
(73) Patentinhaber: ADAM OPEL AG, 65423 Rüsselsheim (DE); Luk Lamellen und Kupplungsbau GmbH, 77815 Bühl (DE)
(72) Erfinder: Hangen, Götz, Dipl.-Ing. (FH), 55578 Wolfsheim (DE); Klösel, Rainer, Dipl.-Ing. (TH), 63225 Langen (DE); Henneberger, Klaus Dr., 77815 Bühl (DE); Fischer, Robert Dr., 8010 Graz (AT)

(56) Entgegenhaltungen:
- DE-A- 3 617 256
- US-A- 5 647 464
- US-A- 5 800 307
- US-A- 5 957 805

## Beschreibung

Die Erfindung betrifft ein Verfahren zum Erkennen einer Anfahrabsicht des Fahrers eines mit einem selbsttätig schaltenden Getriebe ausgerüsteten Kraftfahrzeuges gemäß dem Oberbegriff des Patentanspruches.

Es ist allgemein üblich, dass der Wählhebel für das Schalten eines automatischen Getriebes eines Kraftfahrzeuges in der Parkstellung und in der Neutralstellung blockiert ist und erst durch Betätigen der Fahrbremse, also durch Niedertreten des Bremspedals, freigegeben wird.

Dazu wurden mechanische Sperrmittel für den Wählhebel vorgeschlagen, so wie z. B. mit DE 36 17 256 A1, mit der ein den Wählhebel blockierender Sperrbolzen beschrieben ist, der durch einen Elektromagneten bei getretenem Bremspedal aus der Sperrlage bewegt wird.

Derartige Einrichtungen verhindern zwar ein unbeabsichtigtes Einlegen eines Fahrganges. Sie sind aber durch die Vielzahl der erforderlichen Teile bauaufwendig.

Bei elektronisch gesteuerten selbsttätig schaltenden Getrieben ist es bekannt, die Software der Getriebesteuerung so auszulegen, dass der Wählhebel des Getriebes zwar aus seiner Neutralstellung in Fahrstellung bewegt werden kann, der Fahrgang aber im Getriebe nur dann geschaltet wird, wenn gleichzeitig die Fahrbremse betätigt wurde, also das Bremspedal niedergedrückt ist. Wurde dies vor der Wählhebelbewegung unterlassen, dann ist es bei einer Anfahrabsicht erforderlich, den Wählhebel aus der Fahrstellung wieder zurück in die Neutralstellung zu bewegen, die Bremse zu betätigen und erneut die Fahrstellung zu wählen, damit dann der gewählte Fahrgang geschaltet wird.

Bei diesen automatisch geschalteten Getrieben ist ebenso wie bei mechanischen Sperrmitteln für den Wählhebel sichergestellt, dass bei stehendem Fahrzeug ein Fahrgang nicht unbeabsichtigt geschaltet werden kann.

Nachteilig bei dieser Lösung ist es allerdings, dass bei einer beabsichtigten schnellen Wegfahrt, z. B. aus einer Gefahrensituation, bei der die Bremse nicht betätigt wurde, nicht nur kein Fahrgang eingelegt wird, sondern der Fahrer den Wählhebel wieder zurück auf Neutralposition stellen muss, um dann mit betätigter Betriebsbremse den Getriebewahlvorgang zu dem angestrebten Fahrgang zu wiederholen.

Der Erfindung liegt die Aufgabe zugrunde, ein Verfahren zu schaffen, mit dem die elektronische Steuerung eines selbsttätig schaltenden Getriebes in einem Kraftfahrzeug bei Stellen des Wählhebels aus Neutralposition in einen Fahrgang erkennt, dass der Fahrer anfahren will, auch wenn vor dem Wählen des Fahrgangs keine Betriebsbremse betätigt war, dabei aber sichergestellt bleibt, dass ein Anfahren durch unbeabsichtigtes Verstellen des Wählhebels ausgeschlossen ist. Das Anfahren soll dem Fahrer ohne Verzögerung in jedem Falle möglich sein.

Die Erfindung löst diese Aufgabe mit den Merkmalen des Patentanspruchs.

Wird der Wählhebel von der Neutralposition "N" zu einem Fahrgang "A" bewegt, ohne dass die Betriebsbremse gleichzeitig betätigt worden ist, dann startet ein Timer der Getriebesteuerung, der ein Zeitintervall festlegt, innerhalb dem ein Fahrgang eingelegt werden kann. Dieser Fahrgangwunsch wird von der Steuerung akzeptiert, wenn gleichzeitig innerhalb des Zeitintervalls ein vorgegebener Schwellenwert der Fahrpedalbetätigung überschritten ist. Die Steuerung erkennt daraus, dass sich ein Fahrer im Fahrzeug befindet, der eine eindeutige Anfahrabsicht hat. Der Fahrgang wird geschaltet und das Fahrzeug kann bewegt werden.

Auch wenn innerhalb des Zeitintervalls die Betriebsbremse länger als eine festgelegte Zeit betätigt wird, ist dies ein eindeutiger Hinweis darauf, dass sich ein Fahrer im Fahrzeug befindet und die Steuerung wird den Fahrgangwunsch akzeptieren. Der gewünschte Fahrgang wird geschaltet.

Ist hingegen das vorgegebene Zeitintervall abgelaufen, ohne dass sich ein Fahrer durch Betätigen von Fahrpedal oder Betriebsbremse identifiziert hat, bleibt der gewählte Fahrgang ungeschaltet. Ein unbeabsichtigtes Ingangsetzen des Fahrzeuges ist somit weiterhin ausgeschlossen, obwohl der Fahrer in jedem Fall ohne Verzögerung anfahren kann.

Die Erfindung ist nachstehend anhand eines Flussdiagramms näher erläutert.

Mit dem Verstellen des Wählhebels eines selbsttätig schaltenden Getriebes von der Neutralstellung **N** zu einer Fahrstellung **A** (Aktivität 1) wird von der elektronischen Steuerung des Getriebes geprüft, ob dabei die Betriebsbremse betätigt wurde (Aktivität 2). Wenn dies der Fall ist, dann kann angenommen werden, dass ein Fahrer im Fahrzeug ist und anfahren möchte; der Fahrgang wird eingelegt (Aktivität 3) und das Fahrzeug kann bewegt werden.

Ist bei diesem Verstellen des Wählhebels aber die Betriebsbremse nicht betätigt, dann bleibt das Getriebe trotz verstelltem Wählhebel in Neutralstellung (Aktivität 4), d. h. es wird kein Fahrgang geschaltet und das Fahrzeug ist nicht zu bewegen. Das bedeutet auch, dass durch eine unbeabsichtigte Verstellung des Wählhebels von **N** nach **A** das Fahrzeug bei laufendem Antriebsmotor nicht zu fahren beginnt.

Wird aus dieser Situation der Wählhebel von **A** zurück auf **N** gestellt (Aktivität 5), dann wird sich der Vorgang in an sich bekannter Weise wiederholen.

Wird der Wählhebel jedoch bei Aktivität 5 nicht zurückgestellt, dann wird von einem Timer der elektronischen Steuerung ein Zeitintervall gesetzt (Aktivität 6), welches 1 bis 5 sec betragen kann. Der Ablauf dieses Zeitintervalls wird überwacht (Aktivität 7). Wird innerhalb dieses Zeitintervalls ein vorgegebener für einen Anfahrvorgang angemessener Schwellenwert des Fahrpedalweges überschritten (Aktivität 8), dann wird daraus geschlossen, dass ein Fahrer anwesend ist, der eine Anfahrabsicht hat und ein Fahrgang wird eingelegt (Aktivität 3).

Ebenso führt eine Betätigung der Betriebsbremse über eine vorgegebene Zeitspanne, die einen vorgegebenen Grenzwert überschreitet aber innerhalb des gemäß Aktivität 6 gesetzten Zeitintervalls liegt (Aktivität 9), zum Einlegen eines Fahrganges (Aktivität 3), da auch hier auf die Anwesenheit eines Fahrers geschlossen werden kann.

Im Ergebnis wird durch das erfindungsgemäße Verfahren bei Verstellen des Wählhebels von **N** nach **A** erkannt, ob es sich dabei um ein versehentliches Verstellen handelt, bei dem das Fahrzeug nicht anrollen darf oder ob der Fahrer eine Anfahrabsicht verfolgt, bei der dann umgehend der Fahrgang eingelegt wird und das Fahrzeug somit bewegt werden kann. In letzterem Fall ist eine Zurückbewegung des Wählhebels von **A** auf **N** und ein erneutes Wählen von **N** zu **A** nicht erforderlich.

Die Erfindung ist nicht auf das Ausführungsbeispiel begrenzt. Sie ist sinngemäß als Fahrererkennung z. B. auch anwendbar zum Steuern der Wiedereinschaltung einer Kriechfunktion nach deren Deaktivierung zur Vermeidung übermäßiger Kupplungsbelastung; zum Wiedereinschalten einer Kriechfunktion nach Deaktivierung infolge des Öffnens der Fahrertür oder auch zum Wiedereinschalten einer Kriechfunktion nach Deaktivierung infolge einer Handbremsbenutzung.

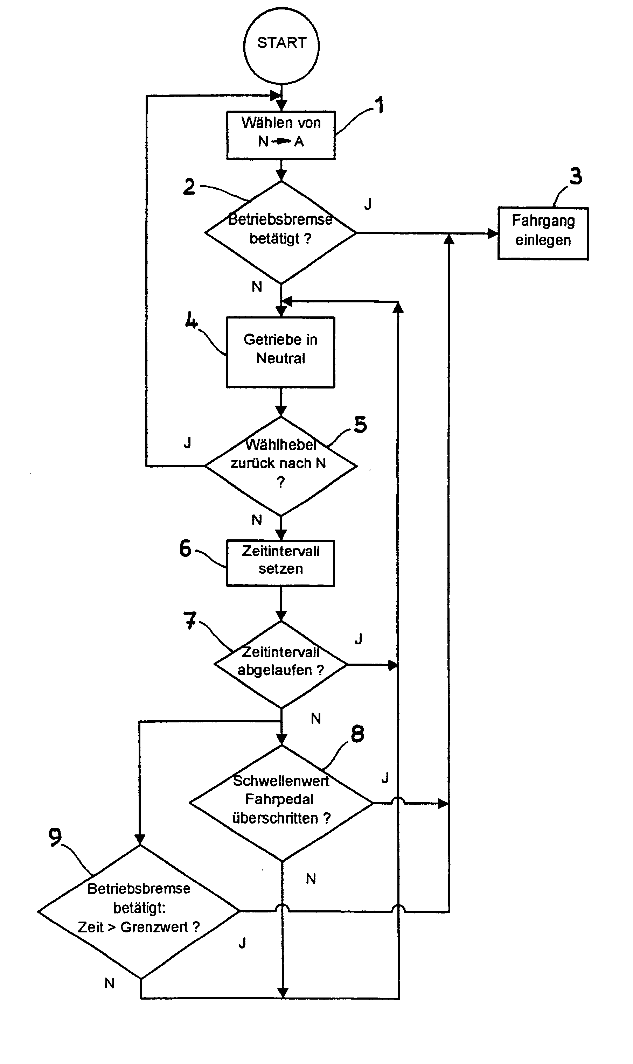

## Patentansprüche

1. Verfahren zum Erkennen einer Anfahrabsicht des Fahrers eines mit einem selbsttätig schaltenden elektronisch gesteuerten zwischen einem mit einem Fahrpedal beeinflussbaren Antriebsmotor und einer Antriebsachse angeordneten Getriebe sowie mit einer Fahrbremse ausgerüsteten Kraftfahrzeuges nach Verstellen eines Getriebe- Wählhebels von einer Stellung "Neutral"(**N**) auf eine Stellung "Vorwärtsfahrt" (**A**),
- wobei vor Einlegen eines Fahrganges geprüft wird, ob die Fahrbremse betätigt ist und bei betätigter Fahrbremse ein Fahrgang eingelegt wird und
- bei nicht betätigter Fahrbremse das Einschalten eines Fahrganges unterbunden ist,
- **dadurch gekennzeichnet, dass**
- mit dem Unterbinden des Einschaltens eines Fahrganges ein Zeitintervall gestartet wird (Aktivität 6) ;
- während des Zeitintervalls geprüft wird, ob ein vorgegebener Schwellenwert der Fahrpedalbetätigung überschritten ist (Aktivität 8) und/oder ob die Fahrbremse länger als eine vorgegebene Mindestzeit betätigt wurde (Aktivität 9) ;
- das Einlegen eines Fahrganges (Aktivität 3) erfolgt, wenn erkannt ist, dass während des Zeitintervalls (Aktivität 6) der vorgegebene Schwellenwert der Fahrpedalbetätigung überschritten war (Aktivität 8) und/oder die Fahrbremse länger als die vorgegebene Mindestzeit betätigt wurde (Aktivität 9).

## Claims

1. Method for detecting a driver's intention to set off in a motor vehicle fitted with an automatically changing, electronically controlled transmission arranged between a drive axle and a drive engine which can be controlled with an accelerator pedal, and with a foot brake, after displacement of a gear selector lever from a "neutral" (N) position to a "forward drive" (A) position,
- wherein before engaging a gear it is checked whether the foot brake is actuated, and if the foot brake is actuated a gear is engaged, and
- if the foot brake is not actuated the engagement of a gear is prevented,
- **characterised in that**
- with the prevention of engagement of a gear an interval of time is started (activity 6);
- during the interval of time it is checked whether a predetermined threshold value of accelerator pedal actuation is exceeded (activity 8) and/or whether the foot brake has been actuated for longer than a predetermined minimum time (activity 9);
- the engagement of a gear (activity 3) takes place when it is detected that during the interval of time (activity 6) the predetermined threshold value of accelerator pedal actuation was exceeded (activity 8) and/or the foot brake was actuated for longer than the predetermined minimum time (activity 9).

## Revendications

1. Procédé d'identification d'une intention de démarrage du conducteur d'un véhicule automobile équipé d'une transmission à commande électronique, à commutation automatique, entre un moteur d'entraînement pouvant être influencé par une pédale d'accélérateur et un essieu d'entraînement, et équipé d'un frein de roulage, après déplacement d'un levier de sélection de transmission, d'une position "neutre" (N) à une position "marche avant" (A),
- où, avant d'engager un rapport de transmission, on vérifie si le frein de roulage est actionné et,si le frein de roulage est actionné, on engage un rapport de transmission, et
- si le frein de roulage n'est pas actionné, on interrompt l'engagement d'un rapport de transmission,
- **caractérisé en ce qu'**
- on démarre un intervalle de temps (activité 6) à l'interruption de l'engagement d'un rapport de transmission ;
- pendant l'intervalle de temps, on vérifie si une valeur de seuil prédéterminée de l'actionnement de pédale d'accélérateur est dépassée (activité 8) et/ou si le frein de roulage a été actionné pendant une durée supérieure à une durée minimale prédéterminée (activité 9) ;
- l'engagement d'un rapport de transmission (activité 3) est effectué si l'on a identifié que, pendant l'intervalle de temps (activité 6), la valeur de seuil prédéterminé de l'actionnement de pédale d'accélérateur était dépassée (activité 8) et/ou si le frein de roulage avait été actionné pendant une durée supérieure à la durée minimale prédéterminée (activité 9).
